# EUROPEAN PATENT APPLICATION

(11) **EP 1 956 815 A1**
(43) Date of publication of application: **13.08.2008**
(21) Application number: 06817923.3
(22) Date of filing: 29.11.2006
(51) Int. Cl.: H04M 3/42

(54) **COMMUNICATION TERMINAL AND METHOD FOR PLAYING THE RBT WHEN CALLING**

(30) Priority: 29.11.2005 CN 200510110890
(71) Applicant: Huawei Technologies Co., Ltd., Longgang District, Shenzhen Guangdong 518129 (CN)
(72) Inventor: LIU, Haibo, Guangdong 518129 (CN)
(74) Representative: Pfenning, Meinig & Partner GbR
(86) International application number: PCT/CN2006/003213
(87) International publication number: WO 2007/062586

(57) **Abstract**

Communication terminal and method for playing the ring back tone when calling, it can make the calling user customized personal ring back tone. Using the capability of the self track switching function and the function of play the local ring back tone of the communication terminal, forbid playing the ring back tone that come from the network by closed the voice channel, instead of playing ring that set locally until the called terminal answering or the calling overtime, reopen the voice channel, make the calling terminal starting the communication with the called terminal, or the network informing that the calling terminal that the other side terminal could not answering. Also preset different the ring for different called numbers or groups, make the calling terminal can set desired ring back tone by itself, and also can get different ring back tone when calling different users.

## Description

This application claims the priority of the Chinese patent application No. 200510110890.2 submitted to the Chinese Patent Office on Nov. 29, 2005, titled "Communication Terminal and Its Method of Playing Ring Back Tone When Originating a Call", the entire content of which is incorporated herein by reference.

### Field of the Invention

The present invention relates to the field of communication technology, and in particular to a communication terminal and its method of playing ring back tone when originating a call.

### Background of the Invention

In the modem society featured by rapidly developing telecommunication technology, with the ever increasing diversification and personalization of users' demands, new services keep being introduced as value-added services of both mobile communication system and fixed communication system so as to meet users' diversified and personalized demands. Among value-added services of mobile communication system, there are Multimedia Message Services (MMS), Interactive Voice Response (IVR), voice SMS, etc. Therefore, the service of personalized ring back tone emerges as the times require.

A ring back tone is a signal tone. During a communication session, a calling party, by using a wired or wireless User Equipment (UE), originates a call to a called UE. After that, it takes about 3 to 10 seconds to wait from the time when the call connection is established between the UEs of both parties to the time when the called party hears the ringing and answers the call. During this period, the calling party may hear a signal tone which is played by network and which indicates that a call signal is being transmitted to the called UE. This signal tone is referred to as ring back tone. A variety of tones, depending upon types of the UE or network, may be adopted as the ring back tone. However, the ring back tone at present mostly uses the prompt beep tone. Therefore, the calling party can hear nothing but the monotonous beep tone. In the specific practice, the ring back tone is stored in network equipment. With the popularization of the UE, particularly mobile phones, users are laying much greater stress on how to personalize the usage of UE. People are no longer satisfied with the often-heard monotonous beep tone when waiting for the called party to answer the call after the call connection is established, but rather, they prefer to hear a more personalized and melodic tune, thereby calling for the birth of Coloring Ring Back Tone (CRBT). CRBT is a service providing personalized ring back tone, i.e., the service that plays music instead of the beep tone, to the calling party after the call connection is established and before the user answers the call.

CRBT is a kind of service that is effective when its users are called. Specifically, users having applied the service are enabled to set and manage in multiple ways the ring back tone to be heard by one who rings them and who, when calling, no longer hears the monotonous beep tone, but the personalized ring back tone set by the called users in network. The personalized ring back tone may be a piece of music or a phone message set by the called users themselves. The personalized ring back tone is predetermined by the called users and it may either be offered by network, or may be a voice file recorded beforehand through the personalized ring back tone service system and uploaded to network by the called users. At present, the CRBT service is realized by network.

In practical applications, however, the above technical solutions of the prior art have the following problems. The calling party, instead of being permitted to choose whatever to hear as the ring back tone by his or her preference, has no choice but to listen to the ring back tone customized by the called party. The ring back tone has an unsteady playback effect which deteriorates intermittently. Users are permitted to choose from only a limited number and kind of ring back tones. The called users are charged for using the CRBT function, which adds an extra burden to the called users.

Major reasons for such situation lie in that: the existing CRBT is a service mainly oriented to the called users, whereas the calling party, instead of being permitted to choose whatever to hear as the ring back tone by his or her preference, has no choice but to listen to the ring back tone customized by the called users; the called users, who subscribe to the service provided by a telecommunications service provider, are charged a corresponding fee for this service which adds an extra burden to the called users. Moreover, the existing ring back tone, which is played via network, is subject to network condition and consequently exhibits an unsteady sound effect which may deteriorate intermittently. The CRBT service has such a high industrial concentration ratio that many Service Providers (SPs) are on their way to construct a perfect mechanism for product development and innovation, which makes the content resource of CRBT lack individuality and diversity, with many repeated content existing among SPs. Further, because the CRBT function is provided by telecommunication SPs, users may choose from only a limited number and kind of optional tones which are restricted by what the SPs offer.

### Summary of the Invention

The present invention provides a communication terminal and its method of playing a ring back tone when originating a call so as to enable a calling party to customize personalized ring back tones.

According to one aspect of the present invention, a method of playing a ring back tone when a communication terminal originates a call includes: closing, by the communication terminal, a voice channel when the communication terminal originates the call as a calling terminal; playing, by the calling terminal, a predetermined local ring back tone when the calling terminal receives a notification from network that a called terminal is ringing; opening, by the calling terminal, the voice channel if the calling terminal, in the process of playing the ring back tone, receives a notification of an answer made by a called party who uses the called terminal or of a call timeout from the network.

According to another aspect of the present invention, a method of playing a ring back tone when a communication terminal originates a call includes: closing, by the communication terminal, a voice channel when the communication terminal originates a call as a calling terminal; playing, by the calling terminal, a predetermined local ring back tone when the calling terminal detects that a called terminal is ringing; opening, by the calling terminal, a voice channel if the calling terminal, in the process of playing the ring back tone, detects an answer made by a called party who uses the called terminal or a call timeout.

According to another aspect of the present invention, a method of playing a ring back tone when a communication terminal originates a call includes: playing, by the communication terminal, a predetermined local ring back tone when the communication terminal originates a call as a calling terminal; performing, by the calling terminal, corresponding processing to the playing if in the process of playing the predetermined local ring back tone, a calling party who uses the calling terminal needs to answer signals from a voice channel, so that the calling party normally answers the signals from the voice channel.

According to another aspect of the present invention, a communication terminal which exchanges voice signals with network via a voice channel includes: a call status detecting module, an audio channel controlling module, a storage module adapted to store a predetermined ring back tone, and a playback module adapted to play the predetermined ring back tone in the storage module, wherein the call status detecting module is adapted to trigger the audio channel controlling module to close the voice channel when detecting a call originated by the communication terminal where it is located, to trigger the playback module to play the predetermined ring back tone in the storage module when detecting a notification from the network that a called terminal is ringing, and to trigger the audio channel controlling module to open the voice channel when detecting a notification of an answer made by a called party who uses the called terminal or of a call timeout from the network.

According to another aspect of the present invention, a communication terminal which exchanges voice signals with network via a voice channel includes a call status detecting module, a storage module adapted to store a predetermined ring back tone, and a playback module adapted to play the predetermined ring back tone in the storage module, wherein the call status detecting module is adapted to trigger the playback module to play the predetermined ring back tone in the storage module when detecting a call originated by the communication terminal where it is located, and to perform corresponding processing to the playing when detecting a need to answer signals from the voice channel so that a calling party normally answers signals from the voice channel.

In the embodiments of the present invention, by use of a communication terminal which is capable of playing a local ringing tone, it is possible that, after a call is originated, a predetermined local ring back tone is played until a voice channel reopens when signals from the voice channel need to be answered, so that a calling party is permitted to choose a preferred ring back tone instead of unwillingly listening to a ring back tone customized by a called party. Furthermore, the ring back tone customized by the calling party is a local ring back tone played via speaker channel of the calling party's terminal itself, which therefore not only eliminates an extra cost for value-added service of a CRBT function charged by a network service provider and lessens mobile terminal users' burden, but also prevents the sound quality of the CRBT from being affected by network condition and thus improves stability.

### Brief Description of the Drawings

Figure 1 is a structural diagram of a communication terminal according to a first embodiment of the present invention;

Figure 2 is a block diagram illustrating major elements of a specific example of the communication terminal shown in Figure 1;

Figure 3 is a flow chart illustrating a method of playing a ring back tone when a call is originated by the communication terminal according to the first embodiment of the present invention;

Figure 4 is a block diagram illustrating major elements of a communication terminal according to another embodiment of the present invention;

Figure 5 is a flow chart illustrating a method of playing a ring back tone when a call is originated according to another embodiment of the present invention.

### Detailed Description of the Embodiments

The above purposes, technical solutions and advantages of the present invention can be understood even more thoroughly from the following detailed descriptions with reference to the drawings.

According to the embodiments of the present invention, a calling terminal, which detects each status during a calling process, is controlled so that: the calling terminal plays a predetermined local ring back tone while waiting for a called party to an answer the call, implements a mutual conversation between both parties after the call is answered, and when the call times out, receives a voice message prompted by network indicating the timeout.

According to a specific example of the present invention, a calling terminal automatically switches its audio channels when originating a call, closes a voice channel for playing voice and opens a speaker channel for playing ring back tone. Then the calling terminal, by detection, receives a notification from network indicating that a called terminal is ringing, and, when receiving the notification, plays a predetermined local ring back tone via the speaker channel of the calling terminal; also, the calling terminal, by detection, receives a notification of an answer made by a called party who uses the called terminal from network, and when receiving the notification, opens the voice channel to conduct a conversation with the called party; further, when the call times out, the calling terminal, by detection, receives a notification of timeout from network, and when receiving the notification, opens the voice channel to receive a voice message prompted from network.

In the embodiments of the present invention, by playing a predetermined local ring back tone, a calling party is enabled to choose his or her preferred, personalized ring back tone, and sound quality of the CRBT is assured of not being affected by network condition, which improves users' experience.

For a more profound understanding, description is given to a communication terminal and its method of playing ring back tone when originating a call according to a first embodiment of the present invention.

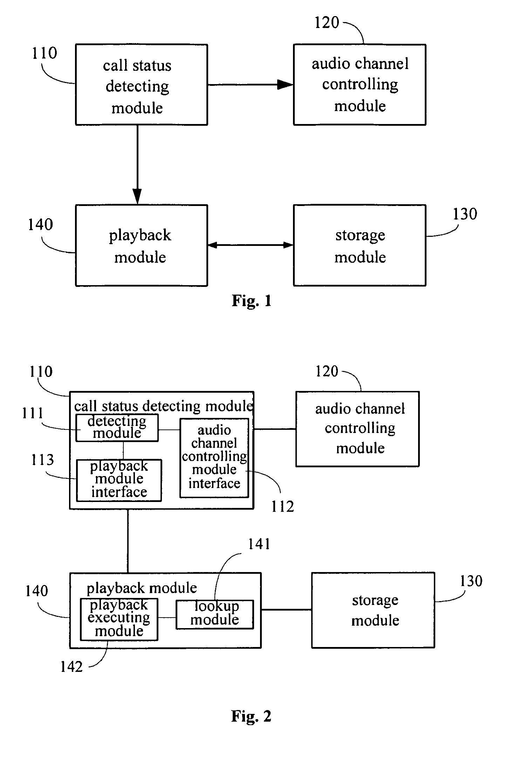

As shown in Figure 1, the communication terminal according to this embodiment includes a call status detecting module 110 adapted to detect all kinds of signals relating to status changes during a call session, an audio channel controlling module 120 adapted to close/open the voice channel, a storage module 130 adapted to store different called numbers, predetermined ring back tones and corresponding relations between the ring back tones and the called numbers or the group to which the called numbers belong, and a playback module 140 adapted to play the predetermined ring back tones in the storage module.

Specifically, the call status detecting module 110, when detecting a call originated by the communications terminal where it is located, triggers the audio channel controlling module 120 to close the voice channel. Also, the call status detecting module 110, when detecting a notification from network that the called terminal is ringing, triggers the playback module 140 which plays a predetermined ring back tone if finding the predetermined ring back tone in the storage module 130. Further, the call status detecting module 110, when detecting a notification of an answer made by a called party who uses the called terminal or of a call timeout from network, triggers the playback module 140 to stop playing the ring back tone and triggers the audio channel controlling module 120 to open the voice channel.

In practice, when a notification of an answer made by the called party or of a call timeout from network is detected, it is also acceptable to trigger merely the audio channel controlling module 120 to open the voice channel while not triggering the playback module 140 to stop playing the ring back tone, and during conversation, the ring back tone may be shielded by closing the speaker channel or by other ways, or the ring back tone may be adjusted to a lower volume and at a suitable time such as the completion of the conversation, the playing of the ring back tone is stopped.

Those skilled in the art shall understand that the communication terminal described in this embodiment may be either a mobile communication terminal or a fixed communication terminal, and the detailed description of them is therefore omitted.

Refer to Figure 2, which is a block diagram illustrating major elements of a specific example of the communication terminal shown in Figure 1.

In Figure 2, the playback module 140 includes a lookup module 141 adapted to search for a corresponding relation in the storage module 130 according to a called number or a group to which the called number belongs; and a playback executing module 142 adapted to play the ring back tone searched out by the lookup module 141.

The call status detecting module 110 includes: a detecting module 111 adapted to detect all kinds of events relating to status transitions during a call session; an audio channel controlling module interface 112 adapted to issue to the audio channel controlling module 120, according to the events detected by the detecting module 111, instructions to open/close the voice channel; and a playback module interface 113 adapted to issue to the playback module 140, according to the events detected by the detecting module 111, instructions to begin/stop playing the ring back tone.

In the specific practice, the detecting module 111 may be adapted as a network-side notification processing module which determines the status of the call session according to the notification from network.

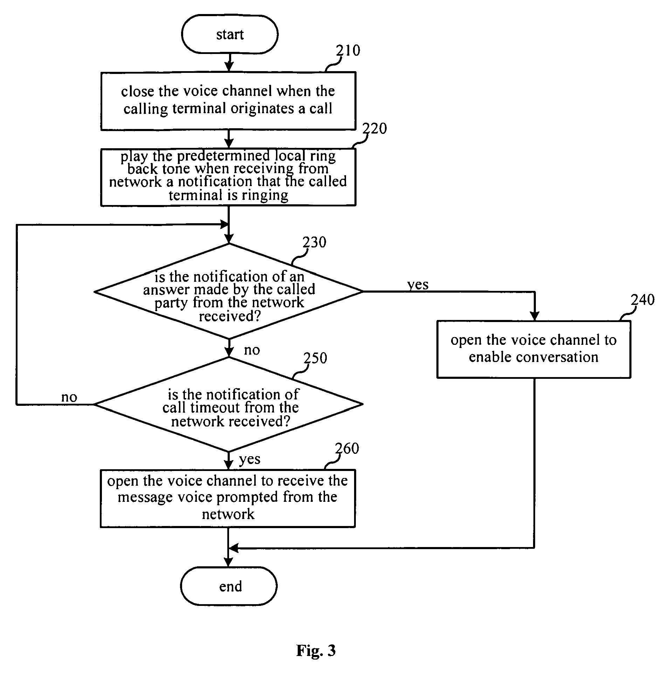

Refer to Figure 3, which is a flow chart illustrating a method according to the first embodiment of the present invention. Communication terminals access the network in wireless mode, i.e. the communication terminals may be mobile phones.

As shown in Figure 2, in block 210, the voice channel is closed when the calling terminal originates a call.

In the specific practice, it may be the case that the call status detecting module, when detecting a call originated from the calling terminal to the called terminal, triggers the audio channel controlling module to automatically close the voice channel and open the speaker channel.

Subsequently, the calling terminal awaits a mutual call connection to be established between both communication parties, and the call status detecting module determines according to signals transmitted from network whether the call connection has been established between both communication parties, then the processing proceeds to block 220 if the call connection is determined as having been established.

In block 220, the calling terminal, when receiving a notification that the called terminal is ringing, plays a predetermined local ring back tone.

In the specific practice, it may be the case that the call status detecting module of the calling terminal, by detection, receives a notification from network that the called terminal is ringing, then, when receiving the notification which indicates that the called terminal begins ringing, the call status detecting module of the calling terminal triggers the playback module to play the predetermined ring back tone.

For the implementation of the embodiments of the present invention, it is necessary that users set local ring back tones of the calling terminal beforehand, and is possible to set different ring back tones for different called numbers or the group to which the called numbers belong, such as setting each ring back tone separately for each different called number in the calling terminal, or adding the called numbers into a group for which a ring back tone is set. For example, as to a called number 13 * * * * * * * * *, users may either set ring back tone 1 for the called number or add the called number into a group, for example, "friends" is set as a group, for which a ring back tone, such as ring back tone 2, is set. In association with the group function of the mobile terminal, it can be realized that different called numbers correspond to different ring back tones, which provides users with larger space for personalization. It is also acceptable to set a unified personalized ring back tone locally without classifying the numbers or groups.

The playback module, according to the settings predetermined by users, searches in the storage module the corresponding relation between the called numbers or the group to which the called numbers belong and the predetermined local ring back tone, and plays via the speaker channel the corresponding predetermined ring back tone according to the search result. For example, group 1 may correspond to ring back tone 1, group 2 to ring back tone 2, group 3 to ring back tone 3, ..., etc., which enables users to choose personalized music by preference, thus solving the problem that the calling party is only a passive receiver.

In other words, in the embodiments of the present invention, the call status detecting module triggers the playback module, after which the playback module, by the called number or the group to which the number belongs, finds the corresponding ring back tone 2, for example, if the called number is in group 2, and plays the ring back tone 2 via the speaker channel according to the search result. The ring back tone 2, which may be polyphonic ring tone, MP3 tone, or AC3 format tone, is abundant enough in variety to satisfy users' desire. Besides, the ring back tone 2 is played locally via the speaker channel, thus ensuring a high and stable sound quality, as well as relieving users of the service fee.

Next, the processing proceeds to block 230, where the calling terminal determines whether the called party answers the phone.

In the specific practice, it may be the case that, in the process of playing the ring back tone, the call status detecting module of the calling terminal, by detection, determines whether the called party answers the phone. If the call status detecting module receives a notification of an answer made by the called party from network, which indicates that the called terminal is in an answer state, the processing proceeds then to block 240. If the call status detecting module does not receive the notification of an answer made by the called party, which indicates that the called party may be absent or unable to answer for the moment, then the processing proceeds to block 250.

In block 240, the calling terminal opens the voice channel to enable conversation between both communication parties.

In the specific practice, it may be the case that the call status detecting module of the calling terminal triggers the playback module and the audio channel controlling module so that the playback module stops playing the ring back tone and the audio channel controlling module closes the speaker channel but opens the voice channel, which enables the calling party to conduct a conversation with the called party via the voice channel until the completion of conversation when the call session is over.

In block 250, the calling terminal determines whether it is a call timeout.

In the specific practice, because in block 230, the call status detecting module does not receive the notification of an answer made by the called party from network, the call status detecting module of the calling terminal continues detecting the communications status from network. If the call status detecting module does not receive the notification of timeout for the called terminal, which indicates that the call does not time out yet, then the processing moves back to block 230 to continue waiting for the conversation with the called party. If the call status detecting module receives the notification of timeout for the called terminal, which indicates that the call times out, then the processing proceeds to block 260.

In block 260, the calling terminal opens the voice channel and receives the voice message prompting the timeout.

In the specific practice, it may be the case that the call status detecting module of the calling terminal triggers the playback module which then stops playing the ring back tone, and also triggers the audio channel controlling module to open the voice channel via which the calling terminal plays the notification of call timeout from network so as to be informed that the called party is absent or unable to answer, thus ending the call session.

The second embodiment of the present invention is substantially the same as the first embodiment except for the difference that, in the second embodiment, communication terminals access the network in wired mode such as by a fixed telephone. The embodiments of the present invention should adopt a fixed telephone that supports at least such functions as setting ring back tones, playing ring back tones, switching audio channels and detecting call status.

In the second embodiment, the calling terminal, which originates a call and closes the voice channel, receives, after the call connection is established, a notification from network that the called terminal is ringing, then plays the predetermined local ring back tone according to the called number or the group to which the number belongs. The call status detecting module determines whether a notification of an answer made by the called party from network is received, and if receiving the notification, the calling terminal opens the voice channel for a conversation with the called party; if not receiving the notification, the call status detecting module determines whether the call connection times out, and if the call connection does not time out, the calling terminal moves back to the previous block to continue waiting for the notification of an answer made by the called party; otherwise, a voice message prompting the timeout from network is received.

The third embodiment of the present invention is substantially the same as the second embodiment except for the difference that, in the third embodiment of the present invention, the calling terminal accesses the network in wireless mode while the called terminal accesses the network in wired mode, so the calling terminal may be a mobile phone and the called terminal a fixed telephone.

The fourth embodiment of the present invention is substantially the same as the third embodiment except for the difference that, in the fourth embodiment of the present invention, the calling terminal accesses the network in wired mode while the called terminal accesses the network in wireless mode, so the calling terminal may be a fixed telephone and the called terminal a mobile phone.

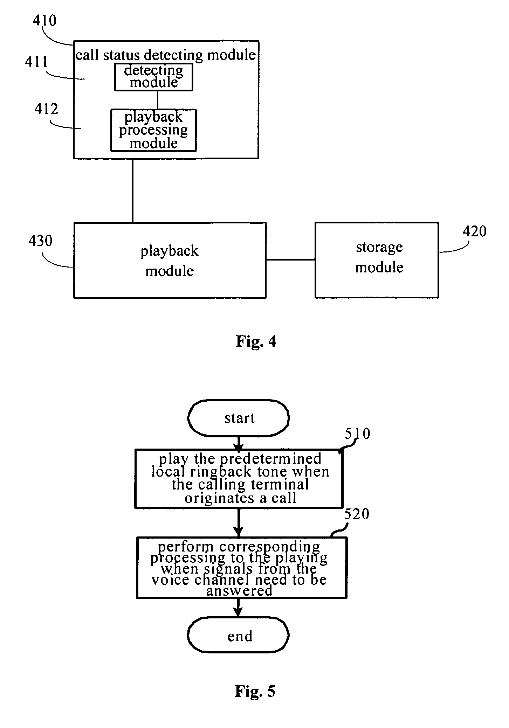

Figure 4 illustrates a communication terminal according to another example of the present invention which exchanges voice signals with network via the voice channel. The communication terminal according to this example includes: a call status detecting module 410, a storage module 420 adapted to store predetermined ring back tones and a playback module 430 adapted to play the predetermined ring back tones in the storage module 420.

When in operation, the call status detecting module 410 triggers the playback module 430 to play a predetermined ring back tone in the storage module 420 when detecting a call originated by the terminal where it is located, and performs corresponding processing to the playing when detecting the need to answer signals from the voice channel so that the calling party normally answers signals from the voice channel.

In a specific implementation, the call status detecting module 410 includes: a detecting module 411 adapted to detect a call originated by the terminal where it is located, detect such events as an answer made by the called party and a call timeout, or detect the choice that the calling party needs to answer via the voice channel; a playback processing module 412 adapted to instruct a playback module 430 to play the ring back tone when the detecting module 411 detects a call originated by the terminal where it is located, and instruct the playback module 430 to stop playing the ring back tone or issue notifications to shield the ring back tone or adjust the volume of the ring back tone when the detecting module 411 detects an answer made by the called party or a call timeout, or detects the choice that the calling party needs to answer via the voice channel.

Refer to Figure 5, which is a flow chart illustrating a method of playing a ring back tone when a call is originated by a communication terminal according to another embodiment of the present invention. The method includes the following blocks:

Block 510, when the communication terminal originates a call as a calling terminal, the calling terminal plays a predetermined local ring back tone; and

Block 520, during playing the ring back tone, the calling terminal performs corresponding processing to the playing when signals from the voice channel need to be answered, so that the calling party normally answers signals from the voice channel.

Specifically, in block 520, the need of answering signals from the voice channel refers to the need of answering signals from the voice channel determined either when detecting an answer made by the called party or a call timeout, or when receiving a notification of an answer made by the called party or of a call timeout from the network, or according to users' choices.

The predetermined local ring back tone is played via the speaker channel.

The corresponding processing performed to enable the calling party normally to answer signals from the voice channel further refers to the processing that stops playing the ring back tone, shields the ring back tone or adjusts the volume of the ring back tone so that calling party may normally answer signals from the voice channel.

Descriptions and illustrations have been made to the present invention by referring to some preferred embodiments of the present invention. However, those skilled in the art should understand that modifications can be made as to both format and detail without departing from the spirit or scope of the present invention.

## Claims

1. A method of playing a ring back tone when a communication terminal originates a call, comprising:
closing, by a communication terminal, a voice channel when the communication terminal originates the call as a calling terminal;
playing, by the calling terminal, a predetermined local ring back tone when the calling terminal receives a notification from network that a called terminal is ringing; and
opening, by the calling terminal, the voice channel if the calling terminal, in the process of playing the ring back tone, receives a notification of an answer made by a called party who uses the called terminal or of a call timeout from the network.

2. The method of playing a ring back tone when a communication terminal originates a call according to claim 1, further comprising: stopping playing the ring back tone, adjusting the ring back tone to a lower volume or shielding the ring back tone if the calling terminal, in the process of playing the ring back tone, receives the notification of an answer made by the called party or of a call timeout from the network.

3. The method of playing a ring back tone when a communication terminal originates a call according to claim 1 or 2, wherein the calling terminal plays the predetermined local ring back tone by outputting the predetermined local ring back tone via a speaker channel.

4. The method of playing a ring back tone when a communication terminal originates a call according to claim 1 or 2, wherein upon opening the voice channel, a calling party who uses the calling terminal begins a conversation with the called party via the voice channel if what is received is the notification of an answer made by the called party from the network; and
the calling terminal plays via the voice channel a received voice message prompted from the network if what is received is the notification of a call timeout from the network.

5. The method of playing a ring back tone when a communication terminal originates a call according to claim 1 or 2, wherein the process of closing, by the communication terminal, a voice channel when the communication terminal originates the call as a calling terminal comprises:
detecting whether the calling terminal originates the call, and closing the voice channel when detecting the call originated by the calling terminal.

6. The method of playing a ring back tone when a communication terminal originates a call according to claim 5, wherein the process of playing, by the calling terminal, a predetermined local ring back tone when the calling terminal receives a notification from network that a called terminal is ringing comprises:
detecting the notification of ringing from network, and when the notification of ringing is detected, searching for the predetermined local ring back tone and playing the predetermined ring back tone via the speaker channel.

7. The method of playing a ring back tone when a communication terminal originates a call according to claim 6, wherein the process of opening, by the calling terminal, the voice channel if the calling terminal, in the process of playing the ring back tone, receives a notification of an answer made by the called party or of a call timeout from the network comprises:
detecting the notification of an answer made by the called party from network in the process of playing the ring back tone, and when receiving the notification of an answer made by the called party from network, opening the voice channel so that the calling terminal conducts a conversation with the called terminal via the voice channel; and
if the notification of an answer made by the called party is not received, determining whether it is a call timeout, and when receiving the notification of timeout for the called terminal from network, opening the voice channel to receive a voice message prompted from network via the voice channel.

8. The method of playing a ring back tone when a communication terminal originates a call according to claim 1, wherein the predetermined local ring back tone comprises at least one of polyphonic ring tone, MP3 tone, and AC3 tone.

9. The method of playing a ring back tone when a communication terminal originates a call according to claim 1, wherein the calling terminal sets different ring back tones for different called numbers or groups and the process that the calling terminal plays a predetermined local ring back tone comprises playing, by the calling terminal, a corresponding predetermined ring back tone according to a called number or the group to which the called number belongs.

10. The method of playing a ring back tone when a communication terminal originates a call according to claim 1, wherein the communication terminal comprises a mobile phone which accesses the network in wireless mode or a fixed telephone which accesses the network in wired mode.

11. A method of playing a ring back tone when a communication terminal originates a call, comprising:
closing, by a communication terminal, a voice channel when the communication terminal originates a call as a calling terminal;
playing, by the calling terminal, a predetermined local ring back tone when the calling terminal detects that a called terminal is ringing; and
opening, by the calling terminal, the voice channel if the calling terminal, in the process of playing the ring back tone, detects an answer made by a called party who uses the called terminal or a call timeout.

12. A method of playing a ring back tone when a communication terminal originates a call, comprising:
playing, by a communication terminal, a predetermined local ring back tone when the communication terminal originates a call as a calling terminal;
performing, by the calling terminal, corresponding processing to the playing if in the process of playing the predetermined local ring back tone, a calling party who uses the calling terminal needs to answer signals from a voice channel, so that the calling party normally answers the signals from the voice channel.

13. The method of claim 12, wherein the calling party needing to answering signals from the voice channel refers to the need of answering signals from the voice channel determined either when detecting an answer made by a called party who uses a called terminal or a call timeout, or when receiving a notification of an answer made by the called party or of a call timeout from network, or according to users' choices.

14. The method of claim 12, wherein the process of playing the predetermined local ring back tone is to play the predetermined local ring back tone via a speaker channel.

15. The method of claim 12, wherein the corresponding processing performed so that the calling party normally answers signals from the voice channel refers to stopping playing the ring back tone, shielding the ring back tone or adjusting volume of the ring back tone so that the calling party normally answers signals from the voice channel.

16. A communication terminal, which exchanges voice signals with network via a voice channel, comprising: a call status detecting module, an audio channel controlling module, a storage module adapted to store a predetermined ring back tone, and a playback module adapted to play the predetermined ring back tone in the storage module, wherein
the call status detecting module is adapted to trigger the audio channel controlling module to close the voice channel when detecting a call originated by the communication terminal where it is located, to trigger the playback module to play the predetermined ring back tone in the storage module when detecting a notification from the network that a called terminal is ringing, and to trigger the audio channel controlling module to open the voice channel when detecting a notification of an answer made by a called party who uses the called terminal or of a call timeout from the network.

17. The communication terminal of claim 16, wherein the storage module stores the predetermined ring back tone by storing a corresponding relation between the predetermined ring back tone and a called number or a group to which the called number belongs; and
the playback module comprises:
a lookup module adapted to find the corresponding relation in the storage module according to the called number or the group to which the called number belongs, and
a playback executing module adapted to play the ring back tone found by the lookup module.

18. The communication terminal of claim 17, wherein the call status detecting module comprises:
a detecting module, adapted to detect all kinds of events relating to status transitions during a call session;
an audio channel controlling module interface, adapted to issue to the audio channel controlling module, according to the events detected by the detecting module, instructions to open or close the voice channel; and
a playback module interface, adapted to issue to the playback module, according to the events detected by the detecting module, instructions to begin or stop playing the ring back tone.

19. The communication terminal of claim 18, wherein the detecting module is a network-side notification processing module which is adapted to determine status of the call session according to the notification from the network.

20. The communication terminal of claim 16, further comprising a speaker channel adapted to output the ring back tone played by the playback module.

21. A communication terminal, which exchanges voice signals with network via a voice channel, comprising: a call status detecting module, a storage module adapted to store a predetermined ring back tone, and a playback module adapted to play the predetermined ring back tone in the storage module, wherein
the call status detecting module is adapted to trigger the playback module to play the predetermined ring back tone in the storage module when detecting a call originated by the communication terminal where it is located, and perform corresponding processing to the playing when detecting a need to answer signals from the voice channel so that a calling party who uses the communication terminal normally answers signals from the voice channel.

22. The communication terminal of claim 22, wherein the call status detecting module comprises:
a detecting module adapted to detect the call originated by the communication terminal where it is located, to detect such events as an answer made by a called party who uses a called terminal or a call timeout, or to detect a choice that the calling party needs to answer via the voice channel; and
a playback processing module adapted to instruct the playback module to play the predetermined ring back tone when the detecting module detects the call originated by the communication terminal where it is located, and to instruct the playback module to stop playing the ring back tone or issue notifications to shield the ring back tone or adjust volume of the ring back tone when the detecting module detects the answer made by the called party or the call timeout, or detects the choice that the calling party needs to answer via the voice channel.
